# EUROPEAN PATENT APPLICATION

(11) **EP 1 712 323 A1**
(43) Date of publication of application: **18.10.2006**
(21) Application number: 05008288.2
(22) Date of filing: 15.04.2005
(51) Int. Cl.: B23K 26/40, B41M 5/24, B41M 5/26, B44C 1/22, B29C 45/14, B41M 3/14

(54) **Method for making a three dimensional laser tag on a transparent membrane before an in-mould injection step**

(71) Applicant: Inmotech Technology Corporation, Taipei County (TW)
(72) Inventor: Lee, Shee-Shung, Shin Juang City, Taipei County (TW)
(74) Representative: Pohlmann, Eckart

(57) **Abstract**

A method for making three-dimensional laser tag with in-mould injection (step F) allows a transparent membrane being formed with laser figure (step A) or mark and being stamped (step D) in advance so as to make the laser figures or marks providing long lastingly three-dimensional shapes corresponding to the transparent membrane. Further, base colors shown with the laser figure or mark is the color of the printed ink so that a variety of color selections can be obtained.

## Description

### BACKGROUND OF THE IVENTION

Field of the Invention:

The present invention is related to a method for making a three-dimensional laser tag with in-mould injection and particularly to a method for forming laser figures or marks on a transparent membrane and performing s tamping in advance so as to allow the laser figures or marks providing corresponding three-dimensional shapes.

Brief Description of Related Art:

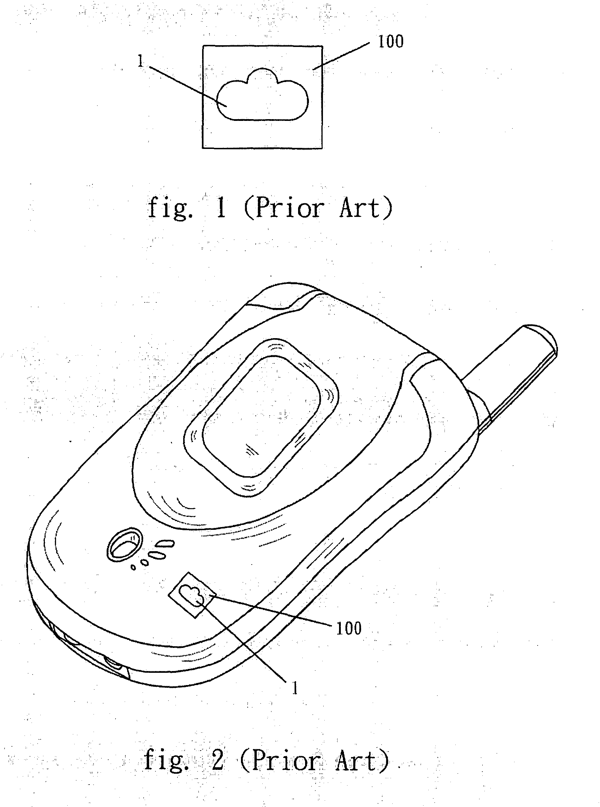

The conventional laser tag as shown in Fig. 1 is formed by that laser figures or marks 1 are roll-printed on an aluminum foil 100 and the laser tag is adhered to a surface of an article such as a cellular phone shown in Fig. 2. It can be seen in Fig. 2 that the conventional laser tag is adhered to an appropriate position on the outer casing of the cellular phone to enhance good looking appearance of the article or to stand for a company's trademark logo with the figure or mark 1 in the laser tag or to be a counterfeit recognition for confirming if the article is a real product made from the company.

However, the figure or mark 1 is disposed on the surface of the aluminum foil 100 such that the base color shown by the laser tag is the color of the aluminum foil itself, i.e., the silver gray color and the base color is unchangeable. Therefore, it is hard to achieve technically for the base color being provided with different colors and even providing arrangement of seven typical colors. Further, the preceding laser tag is attached to the flat or slightly bent surface of the aluminum foil so that the laser tag do not provide a sense of three-dimension. In case of the laser tag being adhered to a surface of the article with a la rge curvature, the laser tag becomes wrinkled due to the aluminum itself being as thin as a paper sheet while the laser tag is adhered to the surface of an article. Under this circumference, it is easy to come off even if the laser tag is adhered with an external force on purpose so that the application of the laser tag is restrictedly limited to a certain extent. In addition, it is difficult to add a counterfeit proof device to the conventional laser tag because it is very easy for the conventional laser tag being copied or torn off due the laser tag being glued to the surface of an article.

Besides, another traditional technique provides a transparent membrane printed with a figure and the transparent membrane at the area of the figure is performed with empty print and a laser tag treated with full image technique is adhered to the empty area of the transparent membrane before a plastic layer is made with injection molding. Although the prior art can avoid being torn off, deficiencies such as showing a single color of aluminum foil only, requiring flat surface adhesion arrangement and providing no sense of three dimension. Moreover, the manufacturing process to make the laser tag is complicated so that the production cost is comparatively higher.

### SUMMARY OF THE INVENTION

An object of the present invention is to provide a method for making a laser three dimensional tag with in-mould injection, which allows the tag being formed three dimensionally, provided with different colors, not easy to become released and low in production cost.

In order to achieve the object, a method for making a laser three dimensional tag with in-mould injection according to the present invention includes the following steps:

(A) at least a laser figure or mark being roll-printed on a transparent membrane with a full image technique;

(B) the transparent membrane 20 with the laser figure or mark being printed with an ink layer;

(C) a medium layer being printed on the ink layer, which has been printed on the transparent membrane;

(D) the membrane with the laser figure or mark being treated three-dimensional stamping to form a three dimensional shape;

(E) the three dimensional membrane in association with the laser figure or mark 10 is treated with trimming; and

(F) the component being completed with injection molding with the laser figure or mark between the transparent membrane and the ink layer.

When the laser figure or mark is formed on the transparent membrane, the transparent membrane keeps transparent in spite of the laser figure or mark having been roll-printed thereon.

The laser figure or mark can be roll-printed at the front side or backside of the transparent membrane.

The laser figure or mark can be an artwork, a trademark logo or a figure with encryption code.

The plastic layer formed by way of injection molding is joined to the medium and the transparent membrane.

A base color shown with the laser figure or mark is the same as the ink color.

Due to the transparent membrane being stamped, the laser figure or mark provides a shape corresponding to the shape of the transparent membrane.

The laser figure or mark is formed on the transparent membrane and stamped in advance so as to make the laser figure or mark providing a long lastingly three-dimensional shape corresponding to the transparent membrane, showing enriched colors of the printing ink layer and the manufacturing process is relatively simple so as to lower production cost significantly.

### BRIEF DESCRIPTION OF THE DRAWINGS

The detail structure, the applied principle, the function and the effectiveness of the present invention can be more fully understood with reference to the following description and accompanying drawings, in which:

Fig. 1 is a plan view of the conventional Laser tag;

Fig. 2 is a perspective view illustrating the conventional Laser tag being attached to a cellular phone;

Fig. 3 is a flow chart of a method for making a Laser tag with in-mold injection according to the present invention;

Fig. 4 is a sectional view illustrating a component made with the method for making a Laser tag with in-mold injection of the present invention; and

Fig. 5 is a perspective view of a cellular phone illustrating the outer casing thereof being fabricated with the method of the present invention.

### DETAILED DESCRIPTION OF THE PRESENT INVENTION

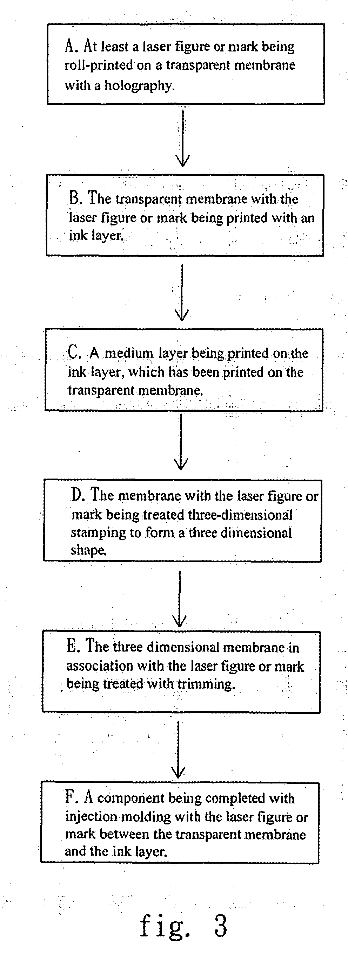

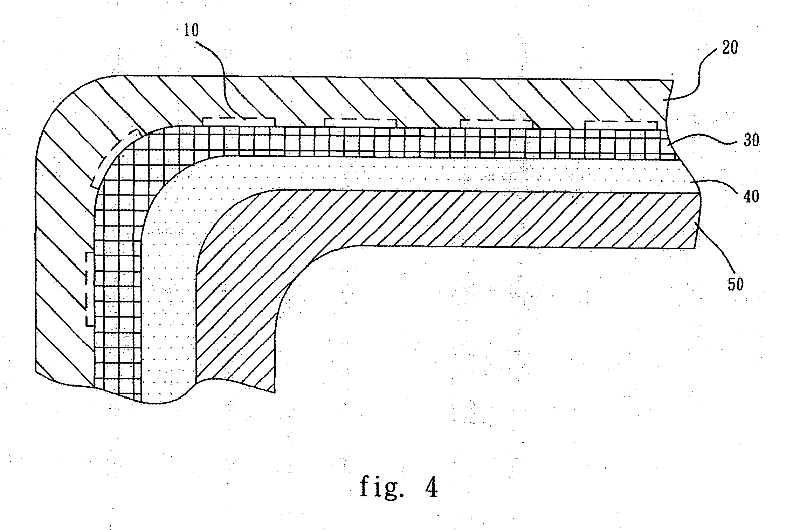

Referring to Figs. 3 and 4, a method for making a three dimensional Laser tag with in-mold injection according to the present invention includes following steps:

(A) At least a laser figure or mark 10 is roll-printed on a transparent membrane 20 with a full image technique and the laser figure or m ark 10 c an b e a figure of art, a trademark standing for a company or an encrypted pattern. The decorated figure or mark 10 can be roll-printed at the front side or back side of the transparent membrane 20 for being chosen while in use. Fig. 4 is an example of the Laser decorated figure or mark 10 being roll-printed on back side of the transparent membrane 20 but it is noted that it is not a restriction to implement the present invention. The transparent membrane 20 with the Laser decorated figure or mark 10 on looks like the original appearance in spite of the Laser decorated figure or mark 10 being seen clearly while it is carefully watched.

(B) The transparent membrane 20 with the laser figure or mark 10 is printed with an ink layer 30. The ink 30 provides effect of color decoration and is printed to the side, which has the decorated figure or mark 10. The ink print technique can utilize screen mask printing or the like.

(C) A medium layer 40 is printed on the ink layer 30, which has been printed on the transparent membrane 20. That is, the facial side of the ink layer 30 contacts with the medium layer 40 and backside thereof contacts with transparent membrane 20. The medium layer 40 assures the ink layer 30 being firmly adhered to and coated between the transparent membrane 20 and a plastic injected layer 50, which is formed in the subsequent step of the manufacturing process. In this way, th e colorful ink layer 30 keeps fresh and is good looking without being flaked off after using a long period of time.

(D) The membrane with the laser figure or mark is treated three-dimensional stamping to constitute a three dimensional shape. A mold tool is used to stamp the membrane 20 with Laser decorated fig ure or mark 10, the ink layer 30 and the medium layer 40 in advance so as to form a three dimensional configuration. In this way, Laser decorated figure or mark represents an effect of being distributed as three-dimensional shape.

(E) The three dimensional membrane in association with the laser figure or mark 10 is treated with trimming. The peripheral of the formed three- dimensional membrane 20 with Laser figure or mark 10 is trimmed for the subsequent injection molding operation.

(F) The component is completed with injection molding with the laser figure or mark between the transparent membrane and the ink layer. A plastic layer 50 is form from the transparent membrane 20 with Laser figure or mark 10, the ink layer 30 and the medium layer 40 by way of injection molding to complete the required component. The plastic layer 50 is joined to the transparent membrane 20 and the Laser figure or mark 10 is disposed between the transparent membrane 20 and the ink layer 30.

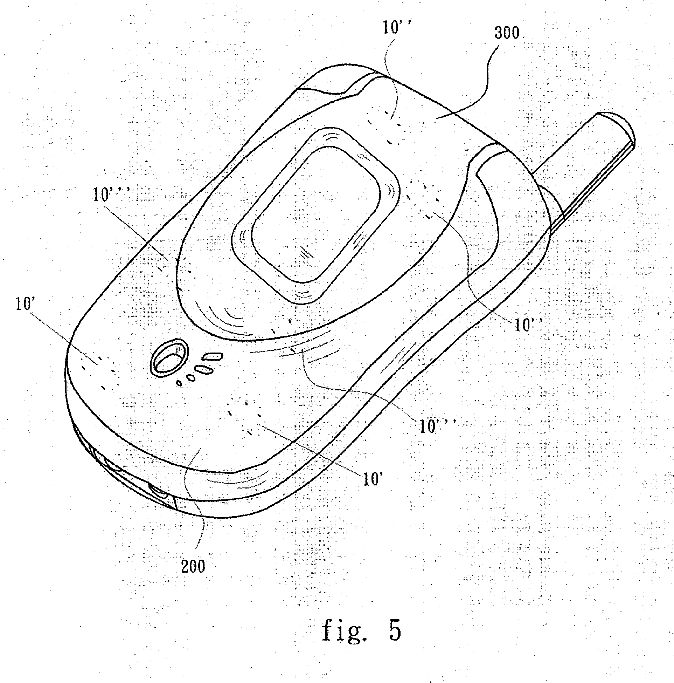

Referring to Fig. 5, a cellular phone is taken as an example to explain the preferred embodiment of a three-dimensional Laser tag with in-mold injection according to the present invention. It is noted that the example is not a restriction of the present invention. The finished Laser figures or marks 10', 10" and 10"' are disposed between the transparent membrane layer on the casing part of the cellular phone and the ink layer and the casing part has a low horizontal zone 200 and a high protrusion zone 300. Due to the Laser figure or mark 10' being located at the low horizontal zone 200, the base color of the Laser figure or mark 10' is the color of the ink layer 30 at the low horizontal zone 200. The Laser figure or mark 10" is located at the high protrusion zone 300, the base color of the Laser figure or mark 10" is the color of the ink layer 30 at the high protrusion zone 300. If the color of the ink layer 30 at the low horizontal zone 200 is different from the color of the ink layer 30 at the high protrusion zone 300 and, for instance, one is red and the other one is green, it means the base color of the Laser figure or mark 10' is different from the base color of the Laser figure or mark 10", i.e., one is red and another is green. As the preceding description, the transparent membrane 20 keeps transparent in spite of the Laser figures or marks 10', 10" being are attached thereto such that the color of the ink layer 30 can expose without interruption and it is capable of enriching color selections for the respective Laser figure or mark. Comparing to the conventional Laser tag being able to show a base color of aluminum foil, it is obvious that the Laser tag of the present invention is much more effective.

Referring to Fig. 5 again, once the transparent membrane 20 is treated with three-dimensional stamping, the Laser figure or mark 10'" juts out with the high protrusion zone 300 and rest area of the transparent membrane 20 is flatly arranged with the low protrusion zone 200 such that the Laser figure or mark 10'" has a three-dimensional shape. That is, the Laser figure or mark 10"' can generate a shape corresponding to the shape of the stamped transparent membrane 20 instead of the conventional Laser tag only being possibly made flatly without a sense of three dimension.

Further, the Laser figures or marks 10', 10" and 10"' are integrally formed on the transparent membrane 20 instead of adhering to the transparent membrane 20 so that problem of the Laser fig ures or marks 10', 10" and 10"' releasing from the transparent membrane 20 can be avoided. In order to prevent from being counterfeited, an encrypted code can be added. Hence, the manufacturing process disclosed in the invention is much simpler than the conventional art and the production cost can be lowered tremendously.

It is appreciated that a method for making three-dimensional Laser tag with in-mold injection according to the present invention provides a transparent membrane integrally with Laser figures or marks being stamped as three-dimensional shapes and the Laser figures and marks keep staying on the transparent membrane without falling off easily. Comparing to the conventional Laser tag, the Laser figures or marks made with the method of the present invention offer a variety of color selections except aluminum base color and can be arranged as three-dimensional shapes instead of a flat shape. Further, the method of the present invention has simple manufacturing process and the production cost can be lowered significantly.

While the invention has been described with referencing to preferred embodiments thereof, it is to be understood that modifications or variations may be easily made without departing from the spirit of this invention, which is defined by the appended claims.

## Claims

1. A method for making three-dimensional laser tag with in-mould injection, comprising the following steps:
(A) at least a laser figure or mark being roll-printed on a transparent membrane with a full image technique;
(B) the transparent membrane 20 with the laser figure or mark being printed with an ink layer;
(C) a medium layer being printed on the ink layer, which has been printed on the transparent membrane;
(D) the membrane with the laser figure or mark being treated three-dimensional stamping to form a three dimensional shape;
(E) the three dimensional membrane in association with the laser figure or mark 10 is treated with trimming; and
(F) the component being completed with injection molding with the laser figure or mark between the transparent membrane and the ink layer.

2. The method for making three-dimensional laser tag with in-mould injection as defined in claim 1, wherein the transparent membrane keeps transparent in spite of the laser figure or mark having been roll-printed thereon.

3. The method for making the three-dimensional laser tag with in-mould injection as defined in claim 1, wherein the laser figure or mark can be roll-printed at the front side or backside of the transparent membrane.

4. The method for making the three-dimensional laser tag with in-mould injection as defined in claims 1, 2 and 3, wherein the laser figure or mark can be an artwork, a trademark logo or a figure with encryption code.

5. The method for making the three-dimensional laser tag with in-mould injection as defined in claim 1, wherein the ink is attached to the surface of the transparent membrane by means of color printing.

6. The method for making the three-dimensional laser tag with in-mould injection as defined in claim 1, wherein the medium is attached to the surface of the transparent membrane by means of printing.

7. The method for making the three-dimensional laser tag with in-mould injection as defined in claim 1, wherein one of two sides of the ink layer contacts with the transparent membrane and another one of the two sides is applied with the medium.

8. The method for making the three-dimensional laser tag with in-mould injection as defined in claim 1, wherein the plastic layer is joined to the transparent membrane.

9. The method for making the three-dimensional laser tag with in-mould injection as defined in claim 1, wherein a base color shown with the laser figure or mark is the ink color.

10. The method for making the three-dimensional laser tag with in-mould injection as defined in claim 1, wherein the laser figure or mark provides a shape corresponding to the shape of the transparent membrane being stamped.
